# EUROPEAN PATENT SPECIFICATION

(11) **EP 0 779 250 B1**
(45) Date of publication and mention of the grant of the patent: **22.08.2001**
(21) Application number: 96119890.0
(22) Date of filing: 11.12.1996
(51) Int. Cl.: C03B 9/453

(54) **Actuating assembly for moving glass articles**
Vorrichtung zum Wegschieben von Glasgegenständen
Dispositif pour dégager des articles en verre

(30) Priority: 12.12.1995 IT TO950995
(43) Date of publication of application: 18.06.1997
(73) Proprietor: BOTTERO S.p.A., 12010 Cuneo (IT)
(72) Inventor: Basso, Gianpiero, 12081 Beinette (IT); Giraudo, Vittore, 12100 Cuneo (IT); Simondi, Carlo, 12100 Cuneo (IT)
(74) Representative: Jorio, Paolo, Dr. Ing.

(56) References cited:
- DE-B- 2 746 675
- US-A- 3 559 537
- US-A- 5 160 015

## Description

The present invention relates to an actuating assembly for moving glass articles, in particular, hollow glass articles, to which the following description refers purely by way of example.

On hollow glassware manufacturing systems, the articles are formed inside respective aligned, adjacent molds, and are removed from the molds and deposited on to respective supporting surfaces on which they remain for a given length of time before being transferred on to a linear conveyor by which they are fed successively to the output of the system.

Each article is transferred from the supporting surface to the linear conveyor by means of a respective actuating assembly, which is at least partially housed inside a respective cavity located between two adjacent molds and adjacent to the respective supporting surface. Each actuating assembly comprises a gripping member for positively engaging at least one article for transfer; a pneumatic linear actuator for moving the gripping member to and from the article for transfer; and an angular actuator for rotating the linear actuator, and hence the gripping member, about a rotation axis and between two angular limit positions.

The linear actuator is connected to a compressed air source by means of a pneumatic circuit comprising a fixed distribution plate having two grooves along which the compressed air flows in use; and two pipes, each of which communicates with a respective groove, extends entirely outside the housing of the angular actuator, and is connected to the fixed distribution plate by means of a respective screw fitting.

Each actuating assembly is cooled by means of a respective cooling device comprising at least a further pipe also extending outside said housing and connected to the actuating assembly by means of a screw fitting.

Though widely used, known actuating assemblies of the above type fail to provide for fast, troublefree, and hence low-cost replacement and maintenance of the actuators, which also applies to routine production change setup operations to adapt the assembly to articles of different shapes and sizes.

For each actuating assembly, in fact, all the above operations involve disconnecting the assembly from the air supply and cooling pipes, and removing the whole assembly from the respective cavity; both of which operations, as well as subsequent reassembly, require the use of specific, at times dedicated, tools, as well as a good deal of physical effort on account of the particular location of the assembly in relation to the molds.

As regards setup of the assembly, on the other hand, this involves, in particular, adjusting the height of the gripping member in relation to the respective supporting surface, which is normally done by trial and error by removing the assembly each time from the relative cavity and adjusting the position of assembly locators housed inside the cavity.

Moreover, known actuating assemblies are relatively bulky widthwise, i.e. perpendicular to said vertical rotation axis, and therefore occupy space which, if clear, would make any operations to be carried out on the system much easier.

It is an object of the present invention to provide a straightforward, low-cost actuating assembly for moving glass articles of which maintenance and replacement is simplified.

According to the present invention, there is provided an actuating assembly for moving glass articles, the assembly comprising a gripping member; actuating means for moving the gripping member; and supporting means for supporting said actuating means and connectable to a fixed structure; the actuating means comprising a pneumatic actuator, and an angular actuator for rotating the pneumatic actuator about a rotation axis and in relation to said supporting means; circuit means being provided for connecting said pneumatic actuator to a source of compressed air, and comprising at least a pair of first conduits for the passage of the compressed air and connected to said pneumatic actuator, and a pair of second conduits connectable to said air source; characterized in that said circuit means also comprise fast-fit connecting means interposed between said first and second conduits to simultaneously connect each said second conduit to a respective said first conduit simultaneously with the connection of said actuating means to said supporting means.

A non-limiting embodiment of the present invention will be described by way of example with reference to the accompanying drawings, in which:
Figure 1 shows a partial section, with parts removed for clarity and one part shown in detail, of a preferred embodiment of the actuating assembly according to the present invention;
Figure 2 shows a section along line II-II in Figure 1;
Figure 3 shows a section along line III-III in Figure 1;
Figure 4 shows a section along line IV-IV in Figure 1;
Figure 5 shows a section along line V-V in Figure 1;
Figures 6, 7, 8 show the same views as in Figures 3, 4, 5 respectively, but with a different arrangement of a number of the components in Figures 3, 4, 5;
Figure 9 shows a larger-scale view of two details in Figures 3 and 6;
Figure 10 shows a section along line X-X in Figure 9;
Figure 11 shows a larger-scale section, with parts removed for clarity, along line XI-XI in Figure 4;
Figures 12 and 13 show larger-scale sections, with parts removed for clarity, along lines XII-XII and XIII-XIII in Figure 4;
Figures 14 and 15 show respective larger-scale sections of a Figure 1 detail in the operating position and as disassembled;
Figure 16 shows a larger-scale section of a further detail in Figure 1;
Figure 17 shows a section along line XVII-XVII in Figure 16;
Figure 18 shows a section, with parts removed for clarity, along line XVIII-XVIII in Figure 1;
Figure 19 shows a partially sectioned side view of a further detail in Figure 1;
Figure 20 shows a partial view in the direction of arrow A in Figure 19;
Figure 21 shows a schematic view of a control unit for controlling an electric motor of the Figure 1 assembly.

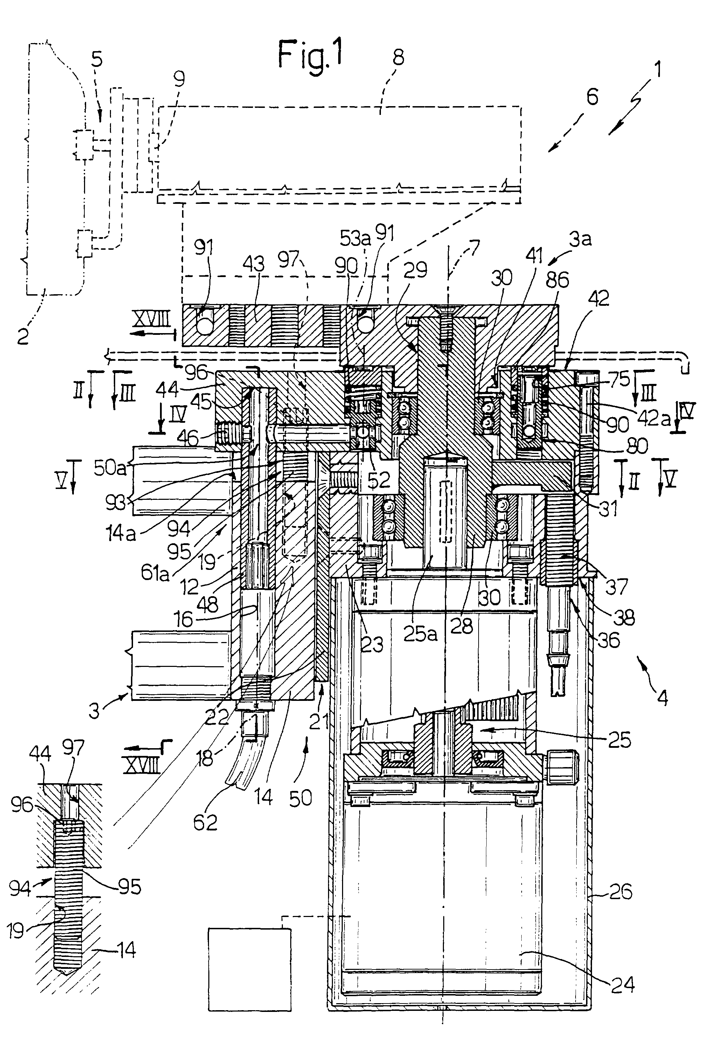

Number 1 in Figure 1 indicates an actuating assembly for transferring hollow glass articles 2, in this case bottles, from a supporting surface (not shown), located adjacent to a finishing mold, on to a linear conveyor (not shown) for conveying articles 2.

Assembly 1 comprises a frame 3 fittable integrally to a fixed body (not shown) and supporting an actuating device 3a for activating a known gripping member 5 (not described in detail) for positively engaging article 2 for transfer. Device 3a comprises a known electric angular actuator 4, and a pneumatic linear actuator 6. Linear actuator 6 is connected to and rotated by angular actuator 4 about a substantially vertical rotation axis 7 between a pickup and a release position wherein article 2 is respectively picked up and released, and comprises a body 8, and an output rod 9 to which gripping member 5 is connected integrally.

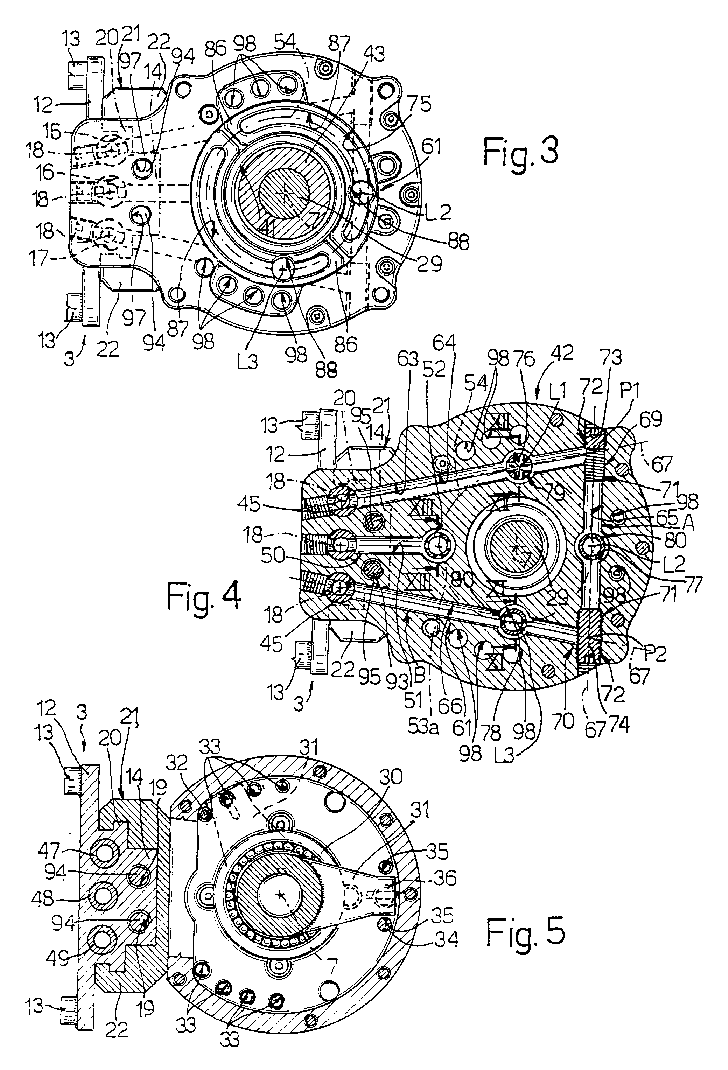

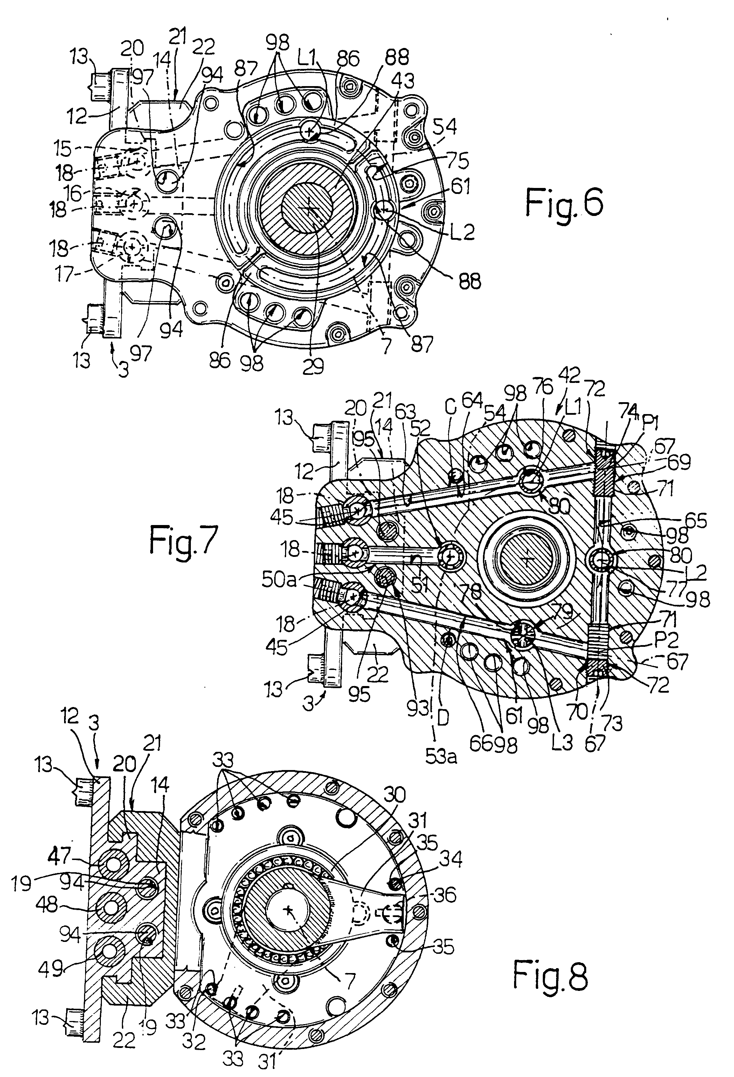

As shown in Figure 1, and particularly in Figures 5, 8 and 18, frame 3 comprises a plate 12 to which are connected integrally the ends of four arms 13, the opposite ends of which are connected integrally, in use, to said fixed body (not shown). Plate 12 comprises an integral elongated intermediate body 14 extending on the opposite side of plate 12 to arms 13, and defined, on the side facing pneumatic actuator 6, by a flat surface 14a perpendicular to axis 7. Body 14 comprises three vertical through holes 15, 16, 17 having respective threaded bottom end portions and respective axes 18 parallel to one another and to axis 7; a further two threaded holes 19 (Figures 5 and 8) parallel to axis 7 and formed on the opposite side of holes 15, 16, 17 to plate 12; and a pair of opposite appendixes 20 extending parallel to plate 12 and forming a guide, parallel to axis 7, of a guide-slide assembly 21. Assembly 21 also comprises a C-shaped slide 22 connected positively and in axially-sliding manner to appendixes 20, and connected integrally to a rigid structure 23 of angular actuator 4 by means of a number of screws (Figure 1).

Angular actuator 4 comprises an electric step motor 24 connected to structure 23 and coaxial with axis 7; and a known speed reducer 25 (shown partially in Figure 1) connected to the shaft of motor 24, and having a respective output shaft 25a extending upwards and coaxial with axis 7. Motor 24 and reducer 25 are housed inside a cup-shaped casing 26 comprising an open top end portion, which is connected to an intermediate portion of structure 23 by means of a number of known elastic toggle devices 27 defining an assembly for fast-fit connecting casing 26 to rigid structure 23.

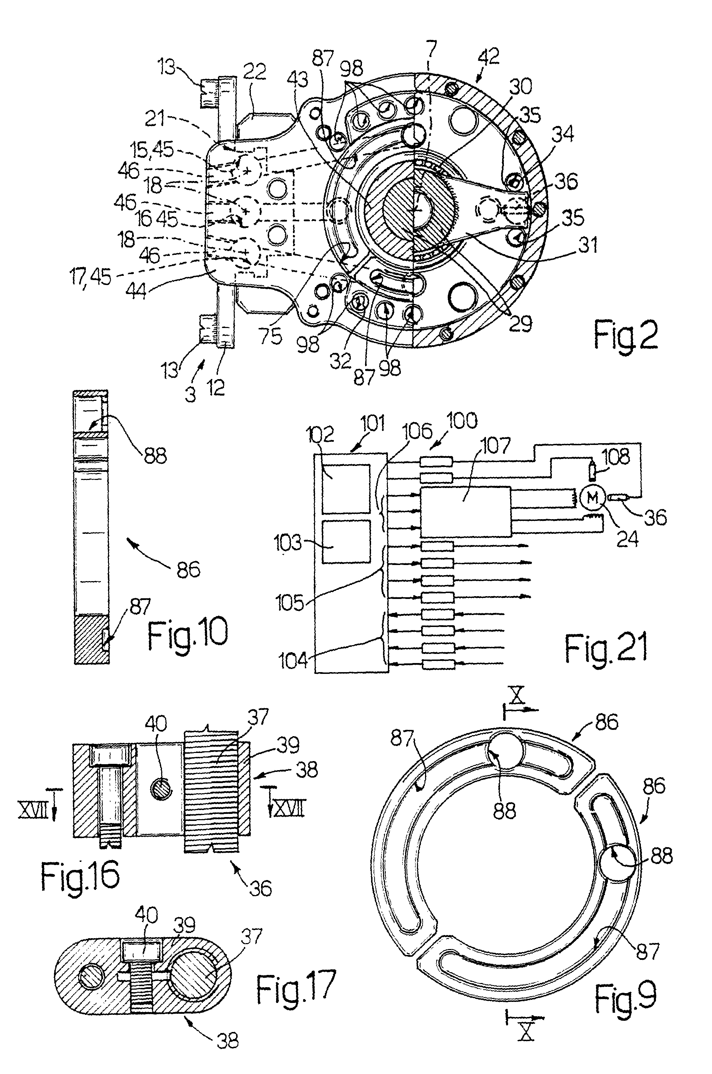

Shaft 25a of reducer 25 is fitted with a bottom end portion 28 of a transmission member 29 connected to rigid structure 23 in axially-fixed manner and so as to rotate about axis 7 by means of a pair of bearings 30. Bottom portion 28 is fitted integrally with one end of an arm 31 projecting perpendicularly to axis 7, and which is rotated by motor 24 between two angular limit positions: a lateral limit position (shown by the dotted line in Figures 5 and 8) corresponding to the release position of member 5, and wherein arm 31 rests against a mechanical limit stop defined by a threaded pin 32 screwed inside one of four threaded holes 33 formed in structure 23; and a central limit position (shown by the continuous line in Figures 2, 5 and 8) corresponding to the pickup position of member 5, and wherein arm 31 rests against a further mechanical limit stop defined by a further threaded pin 34 screwed inside one of two threaded holes 35 formed in structure 23, and extends over a presence sensor 36. Sensor 36 comprises an externally-threaded end portion 37, and extends loosely inside a vertical through hole formed in structure 23, and into casing 26. Sensor 36 is connected adjustably to structure 23 by means of a retaining member 38 connected integrally to structure 23 by means of screws, and which comprises an elastic portion 39 having a threaded hole engaged by said threaded portion 37, and a screw 40 extending crosswise to the threaded hole and for elastically deforming portion 39 to clamp sensor 36 inside the threaded hole.

As shown in Figure 1, transmission member 29 extends upwards through an opening 41 formed in a distribution plate 42 connected to structure 23 by means of a number of screws 42a (only one shown in Figure 1), and comprises a top end portion connected integrally to a movable plate 43 supporting linear actuator 6.

Plate 42 extends crosswise to axis 7, and comprises an end portion 44 located over body 14 of frame 3 and in turn comprising three dead holes 45 (only one shown in Figure 1) coaxial with, and having respective inlets communicating with, respective holes 15, 16, 17. An end portion of a respective tubular sleeve 47, 48, 49 (Figures 1, 8, 18) is housed inside each dead hole 45 and locked in position coaxial with respective axis 18 by a respective pin 46, and an opposite end portion of respective tubular sleeve 47, 48, 49 engages an end portion of respective hole 15, 16, 17 in axially-sliding, fluidtight manner.

In the embodiment shown, sleeves 47, 48, 49 and respective holes 15, 16, 17, together with guide-slide assembly 21, form a device 50 for connecting actuating device 3a to frame 3. According to a variation (not shown), device 50 has no guide-slide assembly 21, and only comprises sleeves 47, 48, 49 connected telescopically to respective holes 15, 16, 17.

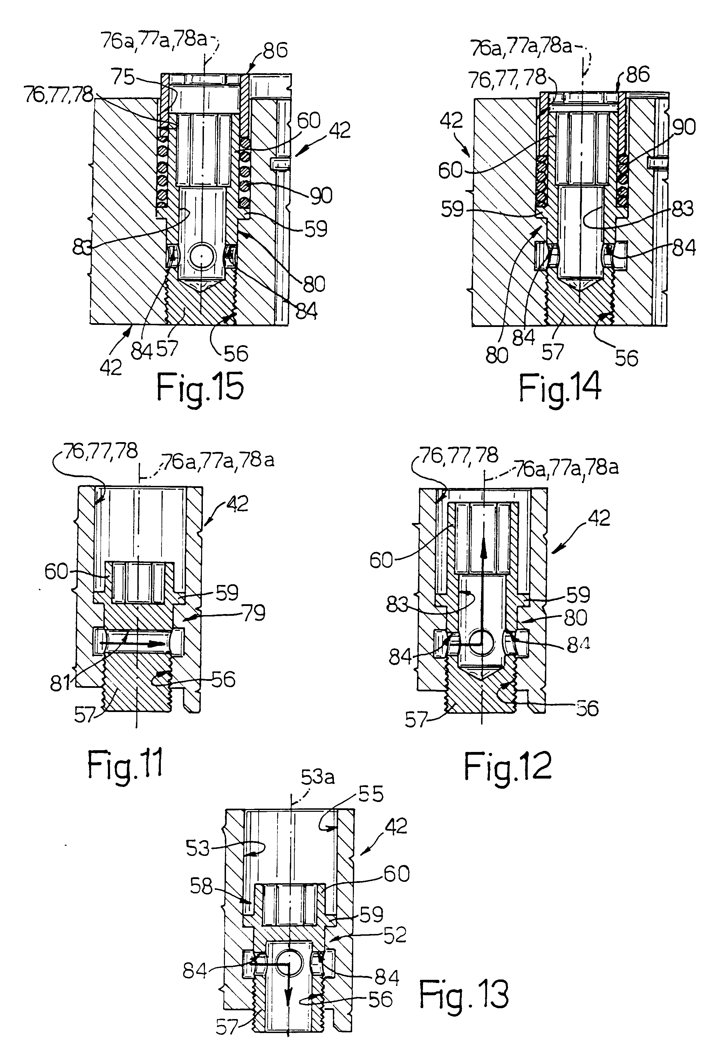

In addition to forming part of device 50, sleeve 48 also forms part of an air cooling circuit 50a, which, as shown, particularly in Figures 4 and 7, also comprises a conduit 51 formed in plate 42 and communicating, at one end, with hole 16 through an opening formed in the lateral wall of the portion of sleeve 48, and, at the other end, with the inside of structure 23 and casing 26 through a curved passage defined by a screw element 52 (Figures 1 and 13). Element 52 is housed inside a cylindrical through seat 53 formed in plate 42 in such a position that a respective axis 53a (Figures 1 and 13) extends parallel to axis 7 and intersects a circumference 54 coaxial with axis 7 (Figures 3, 4, 6, 7). More specifically, and as shown in Figure 13, seat 53 comprises an open-topped cavity 55, and a threaded through hole 56 extending from the bottom wall of cavity 55; hole 56 is engaged by a threaded shank 57 of element 52; and a socket head 58 of element 52 extends inside cavity 55, and comprises a radial outer flange 59 resting on the bottom wall of cavity 55, and an end portion 60 extending upwards inside cavity 55 with ample radial clearance.

In addition to forming part of device 50, sleeves 47, 49 and respective holes 15, 17 also form part of an adaptable pneumatic circuit 61 for supplying and distributing compressed air to linear actuator 6, and, together with sleeve 48 and respective hole 16, a fast-fit connecting device 61a for simultaneously connecting, in one operation, both linear actuator 6 to its compressed air source, and the whole of device 3a to a cooling fluid circulating unit (not shown), simultaneously with connection of device 3a to frame 3.

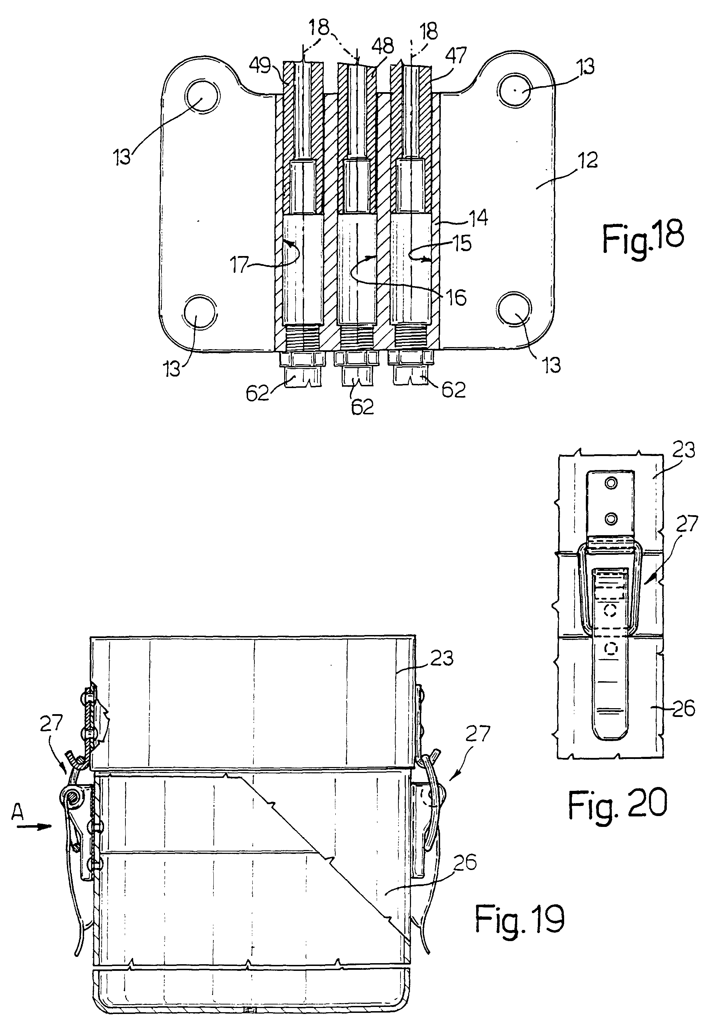

More specifically, in addition to sleeves 47 and 49, pneumatic circuit 61 also comprises two conduits 62 (Figure 18) connected at one end to the compressed air source in known manner, and the respective end portions of which are defined by holes 15 and 17. Circuit 61 also comprises a conduit 63 formed inside plate 42 and in turn comprising three straight portions 64, 65, 66, the respective axes 67 of which extend perpendicularly to axis 7, intersect one another at two points P1, P2, and intersect said circumference at three points L1, L2, L3. More specifically, portions 64 and 66 communicate, at one end, with the inside of respective sleeves 47 and 49 through respective openings formed in the lateral walls of respective sleeves 47, 49, and, at the other end, with respective internally-threaded end portions 69 and 70 of portion 65; and threaded portions 69 and 70 comprise respective inner portions 71 extending between points of intersection P1 and P2, and respective outer portions 72 extending outwards of points P1 and P2. As shown in Figures 4 and 7, threaded portions 69 and 70 are engaged by one or the other of two threaded pins 73 and 74, which have different axial lengths and, as described more clearly later on, are fitted to one or the other of threaded portions 69 and 70 to form assemblies 1 of different characteristics.

As shown in Figures 2, 3 and 6, circuit 61 also comprises a substantially annular cavity 75 formed in the surface of plate 42 facing movable plate 43 and substantially along said circumference 54; cavity 75 is defined by an annular bottom wall in which are formed three seats 76, 77, 78 of the same shape and size as seat 53, and having respective axes 76a, 77a, 78a extending through respective points L1, L2, L3; seats 76 and 78 house respective screw distribution elements, which, as described more clearly later on, are selectable from two distribution elements 79 and 80 (Figures 4 and 7) similar to element 52 and shown in Figures 11 and 12; while seat 77 permanently houses element 80.

More specifically, and as shown in Figure 11, element 79 differs from element 52 in that threaded shank 57 is a solid shank, and comprises a through hole 81 perpendicular to the axis of shank 57 and for ensuring the continuity of portion 64, 66 through which seat 76, 78 is formed.

As shown in Figure 12, on the other hand, element 80 differs from element 52 by comprising a dead hole 83 coaxial with the axis of element 80 and extending through head 60 and partly inside shank 57; shank 57 comprises four lateral passages 84 by which the inside of dead hole 83 communicates with respective conduit portion 64, 66; and the axial length of head 60 is greater than that of head 60 of element 52.

As shown in Figures 3 and 6, annular cavity 75 houses, coaxially with axis 7, two half-rings 86 (Figure 9), each of which has the same curvature as circumference 54 and comprises a respective circumferential face groove 87 formed in the surface of the respective half-ring facing movable plate 43. Half-rings 86 also comprise respective through holes 88 formed along respective grooves 87 and so located that their respective axes extend through points L1 and L2 as shown in Figure 6, or through points L2 and L3 as shown in Figure 3.

As shown in Figures 1, 14 and 15, head 60 of each element 52, 79, 80 is fitted with a respective coil spring 90 extending between flange 59 of the respective distribution element and a respective half-ring 86, which is movable between a raised assembly position (Figure 15) and a lowered operating position (Figure 14) in which the surface of half-rings 86 is forced by respective spring 90 on to movable plate 43 to form a fluidtight connection.

Each face groove 87 communicates with one end (not shown) of a respective supply conduit 91 (Figure 1) formed in movable plate 43, and the opposite end of which communicates with a respective chamber (not shown) of linear actuator 6.

As shown in Figures 1 to 8, assembly 1 also comprises a screw-nut screw actuating device 93, which is operated externally to adjust the vertical position of actuating device 3a, and hence gripping member 5, in a direction parallel to axis 7, and to disconnect device 3a from fixed supporting frame 3. More specifically, for each threaded hole 19, which forms part of device 93, device 93 comprises a screw 94 having a respective threaded shank 95 engaging respective hole 19; and an end portion or head 96, which engages in axially-sliding manner a cylindrical seat formed in portion 44 of fixed plate 42. More specifically, each cylindrical seat comprises an end wall defining an axial shoulder for head 96 of respective screw 94, and communicating externally through an opening 97 formed in fixed plate 42 and for enabling screw 94 to be operated from the outside.

As shown in Figures 2, 3, 4, 6 and 7, fixed plate 42 also comprises a number of further openings 98, each of which, when arm 31 is set to the central position, extends coaxially with a respective threaded hole 33, 35 to enable pins 32, 34 to be moved externally from one threaded hole 33, 35 to the other.

Assembly 1 also comprises a known electronic control unit 100, which, as shown particularly in Figure 21, comprises a known microcontroller 101 in turn comprising a memory block 102 for storing both the program and operating data, and a processing block 103. Microcontroller 101 comprises a number of inputs 104 for entering external drive data, e.g. an external start pulse, a manual start pulse, a stop signal, and possibly a signal for expelling article 2; and a number of outputs 105, 106, of which outputs 106 are those of processing block 103 by which to emit signals for controlling, for example, an electrovalve (if any) of pneumatic circuit 61, cooling of article 2 for transfer, and possibly an expelling device (not shown) for expelling article 2.

Unit 100 also comprises a power module 107, preferably a bipolar chopper guide module, for controlling motor 24, and which is connected to and supplied by outputs 106 of processing block 103 with the processed control signals; a known sensor 108 for detecting the presence of gripping member 5 in the article 2 pickup position; and sensor 36 for detecting the presence of gripping member 5 in the article 2 release position. According to the program and the data stored in memory block 102, processing block 103 calculates in known manner the motion profile to be followed by motor 24 to move gripping member 5 between the article 2 pickup and release positions, and controls power block 107 to drive motor 24 accordingly. The control signals from processing block 103 are synchronized with the external signals supplied to microcontroller 101 by inputs 104.

At the assembly stage, the various components of assembly 1 may be assembled, as required, to form left-hand actuating assemblies (Figures 2, 6, 7 and 8) in which gripping member 5 rotates clockwise into the release position, or right-hand actuating assemblies (Figures 3, 4 and 5) in which gripping member 5 rotates anticlockwise into the release position.

More specifically, and as shown in Figures 3 to 5, to form a right-hand actuating assembly, screw elements 79 and 80 are inserted respectively inside seats 76 and 78; the axes of holes 88 of respective half-rings 86 are aligned with respective points L2 and L3; and pins 73 and 74 are fitted respectively to portion 72 of portion 69 and to portion 71 of portion 70. Conduit 63 is thus divided into two separate branches A and B, which, on the one hand, communicate with the inside of respective sleeves 47 and 49, and, on the other, communicate with respective face grooves 87 via respective elements 80 housed inside seats 77 and 78, and, consequently, with a respective chamber (not shown) of linear actuator 6 via respective conduit 91.

Conversely, and as shown in Figures 6 to 8, to form a left-hand actuating assembly, element 80 is left inside seat 77; elements 79 and 80 are inserted respectively inside seats 78 and 76; the axes of holes 88 are aligned with points L1 and L2; and pins 73 and 74 are fitted respectively to portion 72 of portion 70 and to portion 71 of portion 69. Conduit 63 is thus divided into two separate branches C and D, which, on the one hand, communicate with the inside of respective sleeves 47 and 49, and, on the other, communicate with respective groove 87, but this time via elements 80 inside seats 76 and 77.

The design of assembly 1 therefore provides for greatly simplifying routine maintenance and replacement of actuating device 3a.

That is, by forming part of both guide-slide connecting device 50 and fast-fit connecting device 61a, sleeves 47, 48 and 49 fitted to distribution plate 42 and engaging holes 15, 16 and 17 in axially-sliding, fluidtight manner provide for rapidly connecting and/or disconnecting device 3a, and by simply translating device 3a in a direction parallel to the rotation axis 7 of gripping member 5.

Moreover, routine maintenance and replacement of device 3a, and adjustment of the height of gripping member 5 in relation to frame 3 and, in use, in relation to the supporting surface of article 2, are greatly simplified by screw-nut screw actuating device 93 interposed between distribution plate 42 and frame 3.

Device 93 in fact provides for both disconnecting device 3a from supporting frame 3, i.e. withdrawing device 3a, and for accurately adjusting the position of gripping member 5 working directly from the outside with an ordinary Allen wrench and with very little physical effort required on the part of personnel. Using a pair of screws 94, both cooperating with fixed frame 3, particularly simplifies reassembly or reconnection of device 3a by greatly reducing the time required. That is, while one of screws 94 is used as a means for extracting device 3a, the other remains fixed and is used as a reference or locator, with a memory function, when reconnecting device 3a, which is thus automatically assembled in the previously set position.

Moreover, the design of assembly 1 and, in particular, the provision of quick-change device 61a, and the arrangement of screw-nut screw device 93 provide for achieving highly compact space-saving assemblies for greatly simplifying maintenance of the system as a whole.

As compared with known assemblies, the assembly described is relatively lightweight, thus further simplifying any handling operations.

And finally, the design of assembly 1 provides for quickly and easily converting a right-hand to a left-hand assembly, and vice versa, thus reducing storage.

Clearly, changes may be made to assembly 1 as described and illustrated herein without, however, departing from the scope of the present invention.

In particular, linear actuator 6 and/or angular actuator 4 of assembly 1 as described may be constructed entirely differently from those described by way of example, and may therefore be connected differently.

As regards quick-change device 61a, sleeves 47, 48 and 49 may, for example, be locked inside respective holes 15, 16 and 17 and connected in sliding and fluidtight manner to distribution plate 42; and sealing elements may be provided between sleeves 47, 48, 49 and respective holes 15, 16, 17. Moreover, sleeves 47, 48 and 49 may be dispensed with, in which case, end portion 44 of plate 42 may be positioned directly contacting body 14 of frame 3 so that holes 15, 16, 17 communicate directly (with no in between elements) with respective dead holes 45, and the height adjusting device may be located, for example, between elongated body 14 and plate 12 of frame 3.

## Claims

1. An actuating assembly (1) for moving glass articles (2), the assembly (1) comprising a gripping member (5); actuating means (3a) for moving the gripping member (5); and supporting means (3) for supporting said actuating means (3a) and connectable to a fixed structure; the actuating means (3a) comprising a pneumatic actuator (6), and an angular actuator (4) for rotating the pneumatic actuator (6) about a rotation axis (7) and in relation to said supporting means (3); circuit means (61) being provided for connecting said pneumatic actuator (6) to a source of compressed air, and comprising at least a pair of first conduits (91) for the passage of the compressed air and connected to said pneumatic actuator (6), and a pair of second conduits (62) connectable to said air source; characterized in that said circuit means (61) also comprise fast-fit connecting means (61a) interposed between said first (91) and second (62) conduits to simultaneously connect each said second conduit (62) to a respective said first conduit (91) simultaneously with the connection of said actuating means (3a) to said supporting means (3).

2. An assembly as claimed in Claim 1, characterized by also comprising a fluid cooling circuit (50a) having a further first conduit (51) for supplying the fluid to said actuating means (3a), and a further second conduit (62) connectable to a unit for circulating the fluid; said fast-fit connecting means (61a) being interposed between said further first conduit (51) and said further second conduit (62) to simultaneously connect all the second conduits (62) to the corresponding first conduits (91,51) simultaneously with the connection of said actuating means (3a) to said supporting means (3).

3. An assembly as claimed in Claim 1 or 2, characterized in that each said second conduit (62) comprises a respective end portion (15,16,17) formed in said supporting means (3) and having a respective axis (18).

4. An assembly as claimed in Claim 3, characterized in that said supporting means (3) comprise a lateral surface (14a) on the side facing said pneumatic actuator (6); and said end portions (15,16,17) of said second conduits (62) terminate in said lateral surface (14a).

5. An assembly as claimed in Claim 3 or 4, characterized in that the axes (18) of said end portions (15,16,17) of said second conduits (62) are straight and parallel to one another.

6. An assembly as claimed in Claim 5, characterized in that the axes (18) of said end portions (15,16,17) are parallel to said rotation axis (7).

7. An assembly as claimed in one of the foregoing Claims from 3 to 6, characterized in that said circuit means (61) comprise an intermediate body (42) located about the rotatable part of the angular actuator (4); and in that said fast-fit connecting means (61a) comprise, for each of said second conduits (62), a respective sleeve (47,48,49) extending at least partly inside a respective said end portion (15,16,17) and connected in axially-sliding and fluidtight manner to said intermediate body (42) or to said supporting means (3).

8. An assembly as claimed in Claim 7, characterized in that each of said sleeves (47,48,49) is connected integrally to said intermediate body (42), and comprises an opening permitting communication between the inside of the sleeve (47,48,49) and a respective said first conduit (61,91).

9. An assembly as claimed in Claim 8, characterized in that each said opening is formed in an outer lateral wall of the respective sleeve (47,48,49).

10. An assembly as claimed in any one of the foregoing Claims from 3 to 9, characterized by comprising a guide-slide device (50) for connecting said actuating means (3a) to said supporting means (3); said guide-slide device (50) comprising slide means (47,48,49,22) connected to said actuating means (3a), and guide means (15,16,17,20) for guiding the slide means (47,48,49,22) in a direction parallel to the axes (18) of the end portions (15,16,17) of said second conduits (62); the guide means comprising at least part of said end portions (15,16,17) of the second conduits (62); and the slide means comprising at least part of said sleeves (47,48,49).

11. An assembly as claimed in Claim 10, characterized in that said guide means also comprise a straight guide (20) carried by said supporting means (3); and a slide (22) fitted in axially-sliding manner to said straight guide (20) and connected to said actuating means (3a).

12. An assembly as claimed in any one of the foregoing Claims from 3 to 11, characterized by comprising adjusting means (93) operated externally to continuously adjust the position of said gripping member (5) in relation to said supporting means (3) and in a direction parallel to the axes (7) of the end portions (15,16,17) of said second conduits (62).

13. An assembly as claimed in Claim 12, characterized in that said adjusting means (93) comprise a screw-nut screw adjusting device (19, 94).

14. An assembly as claimed in Claim 13 when dependent on Claim 7, characterized in that said intermediate body (42) is a movable body, and said screw-nut screw device (19, 94) is interposed between the intermediate body (42) and said supporting means (3).

15. An assembly as claimed in Claim 13 or 14, characterized in that said adjusting means (93) comprise memory means (19, 94) for memorizing different axial positions of said gripping member (5) in said direction parallel to the axes (7) of the end portions (15,16,17) of said second conduits (62).

16. An assembly as claimed in any one of the foregoing Claims from 3 to 15, characterized by comprising extracting means (93) operated externally to disconnect said actuating means (3a) from said supporting means (3).

17. An assembly as claimed in Claim 16, characterized in that said extracting means (93) comprise a screw-nut screw assembly, a screw (94) of which extends parallel to the axes (7) of the end portions (15,16,17) of said second conduits (62).

18. An assembly as claimed in Claim 16 or 17 when dependent on Claim 7, characterized in that said screw (94) extends between said intermediate body (42) and said supporting means (3), and is operable from outside through an opening (97) formed in the intermediate body (42).

19. An assembly as claimed in any one of the foregoing Claims, characterized in that said angular actuator (4) comprises an electric motor (24) and a reducer (25), both housed inside a protective casing (26); said casing (26) being connected to a respective supporting body (23) by a fast-fit toggle connecting device (27).

20. An assembly as claimed in any one of the foregoing Claims, characterized in that said circuit means (61) further comprise two half-rings (86) which extend coaxially to said rotation axis (7); said half-rings (86) being able to be selectively disposed in two different operative angular position to define at least partially two different pairs of patches (A,B)(C,D) for the air for the pneumatic actuator (6).

## Patentansprüche

1. Bewegungsanlage (1) zum Bewegen von Glasgegenständen (2), wobei die Anlage (1) ein Greifelement (5); eine Bewegungsvorrichtung (3a) zum Bewegen des Greifelements (5); und eine Trägervorrichtung (3) zum Tragen der Bewegungsvorrichtung (3a) aufweist und an eine feststehende Struktur anschließbar ist; wobei die Bewegungsvorrichtung (3a) eine pneumatische Bewegungsvorrichtung (6) und eine Drehbewegungsvorrichtung (4) zum Drehen der pneumatischen Bewegungsvorrichtung (6) um eine Drehachse (7) und in Relation zu der Trägervorrichtung (3) aufweist; wobei eine Anschlussvorrichtung (61) zum Anschließen der pneumatischen Bewegungsvorrichtung (6) an eine Druckluftquelle vorgesehen ist, die mindestens ein Paar erster Leitungen (91) für den Durchgang der Druckluft aufweist und an der pneumatischen Bewegungsvorrichtung (6) angeschlossen ist, und ein Paar zweiter Leitungen (62), die an die Luftquelle anschließbar sind; dadurch gekennzeichnet, dass die Anschlussvorrichtung (61) auch eine Schnellverschlussverbindungsvorrichtung (61a) aufweist, die zwischen den ersten (91) und zweiten (62) Leitungen angeordnet ist, um gleichzeitig jede zweite Leitung (62) an einer entsprechenden ersten Leitung (91) zeitgleich mit dem Anschluss der Bewegungsvorrichtung (3a) an der Trägervorrichtung (3) anzuschließen.

2. Anlage nach Anspruch 1, dadurch gekennzeichnet, dass sie auch einen Fluidkühlkreis (50a) mit einer weiteren ersten Leitung (51) zum Zuführen des Fluids an die Bewegungsvorrichtung (3a) und einer weiteren zweiten Leitung (62) aufweist, die an eine Einheit zum Zirkulieren des Fluids anschließbar ist; wobei die Schnellverschlussverbindungsvorrichtung (61a) zwischen der weiteren ersten Leitung (51) und der weiteren zweiten Leitung (62) angeordnet ist, um gleichzeitig alle zweiten Leitungen (62) an den entsprechenden ersten Leitungen (91, 51) zeitgleich mit dem Anschluss der Bewegungsvorrichtung (3a) an die Trägereinheit (3) anzuschließen.

3. Anlage nach Anspruch 1 oder 2, dadurch gekennzeichnet, dass jede zweite Leitung (62) einen entsprechenden Endabschnitt (15, 16, 17) aufweist, der in der Trägervorrichtung (3) ausgebildet ist und eine entsprechende Achse (18) hat.

4. Anlage nach Anspruch 3, dadurch gekennzeichnet, dass die Trägervorrichtung (3) eine Seitenfläche (14a) auf der der pneumatischen Bewegungsvorrichtung (6) zugewandten Seite hat; und die Endabschnitte (15, 16, 17) der zweiten Leitungen (62) in der Seitenfläche (14a) enden.

5. Anlage nach Anspruch 3 oder 4, dadurch gekennzeichnet, dass die Achsen (18) der Endabschnitte (15, 16, 17) der zweiten Leitungen (62) zueinander geradlinig und parallel verlaufen.

6. Anlage nach Anspruch 5, dadurch gekennzeichnet, dass die Achsen (18) der Endabschnitte (15, 16, 17) parallel zu der Rotationsachse (7) sind.

7. Anlage nach einem der vorangehenden Ansprüche 3 bis 6, dadurch gekennzeichnet, dass die Anschlussvorrichtung (61) einen Zwischenkörper (42) aufweist, der um den Drehteil der Drehbewegungsvorrichtung (4) angeordnet ist; und dass die Schnellverschlussverbindungsvorrichtung (61a) für jede zweite Leitung (62) eine entsprechende Buchse (47, 48, 49) aufweist, die sich zumindest teilweise in einen entsprechenden Endabschnitt (15, 16, 17) erstrecken und die in einer axial gleitenden und fluiddichten Weise mit dem Zwischenkörper (42) oder mit der Trägervorrichtung (3) verbunden sind.

8. Anlage nach Anspruch 7, dadurch gekennzeichnet, dass jede der Buchsen (47, 48, 49) integral mit dem Zwischenkörper (42) verbunden ist und eine Öffnung aufweist, die eine Verbindung zwischen der Innenseite der Buchse (47, 48, 49) und einer entsprechenden ersten Leitung (61, 91) erlaubt.

9. Anlage nach Anspruch 8, dadurch gekennzeichnet, dass jede Öffnung in einer äußeren Seitenwand der entsprechenden Buchse (47, 48, 49) ausgebildet ist.

10. Anlage nach einem der vorangehenden Ansprüche 3 bis 9, dadurch gekennzeichnet, dass sie eine Führungsgleitvorrichtung (50) zum Verbinden der Bewegungsvorrichtung (3a) mit der Trägervorrichtung (3) aufweist; wobei die Führungsgleitvorrichtung (50) eine mit der Bewegungsvorrichtung (3a) verbundene Gleitvorrichtung (47, 48, 49, 22) und eine Führungsvorrichtung (15, 16, 17, 20) zum Führen der Gleitvorrichtung (47, 48, 49, 22) in einer zu den Achsen (18) der Endabschnitte (15, 16, 17) der zweiten Leitungen (62) parallelen Richtung aufweist; wobei die Führungsvorrichtung zumindest einen Teil der Endabschnitte (15, 16, 17) der zweiten Leitungen (62) aufweist; und die Gleitvorrichtung mindestens einen Teil der Buchsen (47, 48, 49) aufweist.

11. Anlage nach Anspruch 10, dadurch gekennzeichnet, dass die Führungsvorrichtung auch eine gerade Führung (20), die durch die Trägervorrichtung (3) getragen ist; und einen Schlitten (22) aufweist, der in einer axial gleitenden Weise an der geraden Führung (20) angebracht und mit der Bewegungsvorrichtung (3a) verbunden ist.

12. Anlage nach einem der vorangehenden Ansprüche 3 bis 11, dadurch gekennzeichnet, dass sie eine Einstellvorrichtung (93) aufweist, die extern betätigt wird, um die Position des Greifelements (5) relativ zu der Trägervorrichtung (3) und in einer parallelen Richtung zu den Achsen (7) der Endabschnitte (15, 16, 17) der zweiten Leitungen (62) einzustellen.

13. Anlage nach Anspruch 12, dadurch gekennzeichnet, dass die Einstellvorrichtung (93) eine Schrauben-Mutter Schraubeinstellvorrichtung (19, 94) aufweist.

14. Anlage nach Anspruch 13 bei Abhängigkeit nach Anspruch 7, dadurch gekennzeichnet, dass der Zwischenkörper (42) ein bewegbarer Körper ist und die Schrauben-Mutter Schraubvorrichtung (19, 94) zwischen dem Zwischenkörper (42) und der Trägervorrichtung (3) angeordnet ist.

15. Anlage nach Anspruch 13 oder 14, dadurch gekennzeichnet, dass die Einstellvorrichtung (93) eine Speichervorrichtung (19, 94) zum Speichern verschiedener axialer Positionen des Greifelements (5) in der zur Achse (7) der Endabschnitte (15, 16, 17) der zweiten Leitungen (62) parallelen Richtung aufweist.

16. Anlage nach einem der vorangehenden Ansprüche 3 bis 15, dadurch gekennzeichnet, dass sie eine Extrahiervorrichtung (93) aufweist, die extern betätigt wird, um die Bewegungsvorrichtung (3a) von der Trägervorrichtung (3) zu trennen.

17. Anlage nach Anspruch 16, dadurch gekennzeichnet, dass die Extrahiervorrichtung (93) eine Schrauben-Mutter Schraubvorrichtung aufweist, deren Schraube (94) sich parallel zu der Achse (7) der Endabschnitte (15, 16, 17) der zweiten Leitungen (62) erstreckt.

18. Anlage nach Anspruch 16 oder 17 bei Abhängigkeit von Anspruch 7, dadurch gekennzeichnet, dass sich die Schraube (94) zwischen dem Zwischenkörper (42) und der Trägervorrichtung (3) erstreckt und von außerhalb durch eine Öffnung (97) betätigt wird, die in den Zwischenkörper (42) ausgebildet ist.

19. Anlage nach einem der vorangehenden Ansprüche, dadurch gekennzeichnet, dass die Drehbewegungsvorrichtung (4) einen Elektromotor (24) und einen Reduzierer (25) aufweist, die beide in einem Schutzgehäuse (26) aufgenommen sind; wobei das Gehäuse (26) mit einem entsprechenden Trägerkörper (23) durch eine Schnellverschlusshebel-Verbindungsvorrichtung (27) verbunden ist.

20. Anlage nach einem der vorangehenden Ansprüche, dadurch gekennzeichnet, dass die Anschlussvorrichtung (61) überdies zwei Halbringe (86) aufweist, die sich koaxial zur Rotationsachse (7) erstrecken; wobei die Halbringe (86) wahlweise in zwei verschiedenen arbeitsmäßigen Winkelpositionen angeordnet werden können, um zumindest teilweise zwei unterschiedliche Flächenpaare (A, B) (C, D) für die Luft der pneumatischen Bewegungsvorrichtung (6) zu definieren.

## Revendications

1. Ensemble d'actionnement (1) pour déplacer des articles en verre (2), cet ensemble (1) comprenant un élément de préhension (5), des moyens d'actionnement (3a) pour déplacer l'élément de préhension (5), et des moyens de support (3) destinés à supporter ces moyens d'actionnement (3a) et pouvant être joints à une structure fixe, les moyens d'actionnement (3a) comprenant un actionneur pneumatique (6) et un actionneur angulaire (4) destiné à faire tourner l'actionneur pneumatique (6) autour d'un axe de rotation (7) et par rapport aux moyens de support (3), des moyens de formation de circuit (61) étant prévus pour relier l'actionneur pneumatique (6) à une source d'air comprimé et comprenant au moins une paire de premiers conduits (91) pour le passage de l'air comprimé reliés à l'actionneur pneumatique (6) et une paire de deuxièmes conduits (62) pouvant être reliés à la source d'air comprimé, caractérisé par le fait que les moyens de formation de circuit (61) comprennent aussi des moyens de raccordement à montage rapide (61a) interposés entre les premiers conduits (91) et les deuxièmes conduits (62) pour raccorder simultanément chaque deuxième conduit (62) à un premier conduit respectif (91) en même temps que le raccordement des moyens d'actionnement (3a) aux moyens de support (3).

2. Ensemble selon la revendication 1, caractérisé par le fait qu'il comprend aussi un circuit de refroidissement de fluide (50a) ayant un autre premier conduit (51) pour l'envoi du fluide aux moyens d'actionnement (3a) et un autre deuxième conduit (62) raccordable à un dispositif de mise en circulation du fluide, les moyens de raccordement à montage rapide (61a) étant interposés entre l'autre premier conduit (51) et l'autre deuxième conduit (62) pour raccorder simultanément tous les deuxièmes conduits (62) aux premiers conduits correspondants (91, 51) en même temps que le raccordement des moyens d'actionnement (3a) au moyens de support (3).

3. Ensemble selon l'une des revendications 1 et 2, caractérisé par le fait que chaque deuxième conduit (62) comprend une partie d'extrémité respective (15, 16, 17) formée dans les moyens de support (3) et ayant un axe respectif (18).

4. Ensemble selon la revendication 3, caractérisé par le fait que les moyens de support (3) comprennent une surface latérale (14a) sur le côté qui fait face à l'actionneur pneumatique (6), et les parties d'extrémité (15, 16, 17) des deuxièmes conduits (62) se terminent dans la surface latérale (14a).

5. Ensemble selon l'une des revendications 3 et 4, caractérisé par le fait que les axes (18) des parties d'extrémité (15, 16, 17) des deuxièmes conduits (62) sont rectilignes et parallèles.

6. Ensemble selon la revendication 5, caractérisé par le fait que les axes (18) des parties d'extrémité (15, 16, 17) sont parallèles à l'axe de rotation (7).

7. Ensemble selon l'une des revendications précédentes 3 à 6, caractérisé par le fait que les moyens de formation de circuit (61) comprennent un corps intermédiaire (42) situé autour de la partie tournante de l'actionneur angulaire (4), et que les moyens de raccordement à montage rapide (6 la) comprennent pour chacun des deuxièmes conduits (62) un manchon respectif (47, 48, 49) qui s'étend au moins en partie à l'intérieur d'une partie d'extrémité respective (15, 16, 17) et est joint de manière à coulisser axialement et de manière étanche aux fluides au corps intermédiaire (42) ou aux moyens de support (3).

8. Ensemble selon la revendication 7, caractérisé par le fait que chacun des manchons (47, 48, 49) est joint au corps intermédiaire (42) de façon à faire corps avec celui-ci et comprend une ouverture permettant la communication entre l'intérieur du manchon (47, 48, 49) et un premier conduit respectif (61, 91).

9. Ensemble selon la revendication 8, caractérisé par le fait que chaque ouverture est formée dans une paroi latérale extérieure du manchon respectif (47, 48, 49).

10. Ensemble selon l'une des revendications précédentes 3 à 9, caractérisé par le fait qu'il comprend un dispositif guidage-coulisseau (50) pour la liaison des moyens d'actionnement (3a) aux moyens de support (3), ce dispositif guidage-coulisseau (50) comprenant des moyens coulissants (47, 48, 49, 22) joints aux moyens d'actionnement (3a) et des moyens de guidage (15, 16, 17, 20) destinés à guider les moyens coulissants (47, 48, 49, 22) dans une direction parallèle aux axes (18) des parties d'extrémité (15, 16, 17) des deuxièmes conduits (62), les moyens de guidage comprenant au moins une partie des parties d'extrémité (15, 16, 17) des deuxièmes conduits (62), et les moyens coulissants comprenant au moins une partie des manchons (47, 48, 49).

11. Ensemble selon la revendication 10, caractérisé par le fait que les moyens de guidage comprennent aussi un guidage droit (20) porté par les moyens de support (3) et un coulisseau (22) monté de manière à coulisser axialement sur ce guidage droit (20) et joint aux moyens d'actionnement (3a).

12. Ensemble selon l'une des revendications précédentes 3 à 11, caractérisé par le fait qu'il comprend des moyens de réglage (93) manoeuvrés extérieurement pour régler de manière progressive la position de l'élément de préhension (5) par rapport aux moyens de support (3) et dans une direction parallèle aux axes (7) des parties d'extrémité (15, 16, 17) des deuxièmes conduits (62).

13. Ensemble selon la revendication 12, caractérisé par le fait que les moyens de réglage (93) comprennent un dispositif de réglage à vis et écrou (19, 94).

14. Ensemble selon la revendication 13 lorsqu'elle dépend de la revendication 7, caractérisé par le fait que le corps intermédiaire (42) est un corps mobile et le dispositif à vis et écrou (19, 94) est interposé entre le corps intermédiaire (42) et les moyens de support (3).

15. Ensemble selon l'une des revendications 13 et 14, caractérisé par le fait que les moyens de réglage (93) comprennent des moyens de mémorisation (19, 94) destinés à mémoriser différentes positions axiales de l'élément de préhension (5) dans la direction parallèle aux axes (7) des parties d'extrémité (15, 16, 17) des deuxièmes conduits (62).

16. Ensemble selon l'une des revendications précédentes 3 à 15, caractérisé par le fait qu'il comprend des moyens d'extraction (93) manoeuvrés extérieurement pour détacher les moyens d'actionnement (3a) des moyens de support (3).

17. Ensemble selon la revendication 16, caractérisé par le fait que les moyens d'extraction (93) comprennent un ensemble vis-écrou dont la vis (94) s'étend parallèlement aux axes (7) des parties d'extrémité (15, 16, 17) des deuxièmes conduits (62).

18. Ensemble selon l'une des revendications 16 et 17 lorsqu'elle dépend de la revendication 7, caractérisé par le fait que la vis (94) s'étend entre le corps intermédiaire (42) et les moyens de support (3) et peut être manoeuvrée de l'extérieur par une ouverture (97) faite dans le corps intermédiaire (42).

19. Ensemble selon l'une des revendications précédentes, caractérisé par le fait que l'actionneur angulaire (4) comprend un moteur électrique (24) et un réducteur (25), tous les deux logés à l'intérieur d'un boîtier protecteur (26), ce boîtier (26) étant joint à un corps support respectif (23) par un dispositif de jonction à bascule à fixation rapide (27).

20. Ensemble selon l'une des revendications précédentes, caractérisé par le fait que les moyens de formation de circuit (61) comprennent en outre deux demi-anneaux (86) dont l'axe coïncide avec l'axe de rotation (7), ces demi-anneaux (86) pouvant être mis sélectivement dans deux positions angulaires actives différentes pour former au moins partiellement deux paires différentes de chemins (A, B)(C, D) pour l'air pour l'actionneur pneumatique (6).
